# EUROPEAN PATENT SPECIFICATION

(11) **EP 2 136 083 B1**
(45) Date of publication and mention of the grant of the patent: **14.12.2016**
(21) Application number: 09001049.7
(22) Date of filing: 26.01.2009
(51) Int. Cl.: F04C 23/00, F04C 18/344, F04C 18/356

(54) **METHOD FOR COMPRESSING A REGRIGERANT**
VERFAHREN ZUM VERDICHTEN EINES KÜHLMITTELS
PROCÉDÉ DE COMPRESSION D'UN RÉFRIGÉRANT

(30) Priority: 17.06.2008 JP 2008157825
(43) Date of publication of application: 23.12.2009
(73) Proprietor: MITSUBISHI ELECTRIC CORPORATION, Chiyoda-ku Tokyo 100-8310 (JP)
(72) Inventor: Maeyama, Hideaki, Tokyo 100-8310 (JP); Ishii, Minoru, Tokyo 100-8310 (JP); Fushiki, Takeshi, Tokyo 100-8310 (JP); Kato, Taro, Tokyo 100-8310 (JP); Ishizono, Fumihiko, Tokyo 100-8310 (JP)
(74) Representative: Pfenning, Meinig & Partner mbB

(56) References cited:
- EP-A2- 0 556 746
- WO-A1-00/75517
- WO-A1-2008/053951
- JP-A- 1 142 282
- JP-A- 1 268 881
- JP-A- 8 177 772
- JP-A- 2002 005 043
- JP-A- 2008 128 219
- JP-A- 2008 128 220
- US-A- 5 947 710
- US-A- 5 951 273

## Description

### BACKGROUND OF THE INVENTION

### Field of the Invention

The present invention relates to a rotary compressor used in the refrigerating and air conditioning apparatus, particularly, it relates to a rotary compressor for compressing any one of refrigerants which includes a halogenated hydrocarbon having carbon-carbon double bond within its composition, a hydrocarbon having carbon-carbon double bond within its composition, and a mixture including at least one of the halogenated hydrocarbon having carbon-carbon double bond within its composition and the hydrocarbon having carbon-carbon double bond within its composition.

### Description of the Related Art

In the field of automobile air conditioning, there is HFO-1234yf (CF₃CF=CH₂) as the most likely refrigerant having a low GWP (global warming potential).

Although there are no substitute measures of the HFC refrigerant as yet for the fixed-type air conditioners, however, non-combustible refrigerants (for example, combinations of compounds having a double bond, bromine, iodine, and oxygen) such as a hydrocarbon having carbon-carbon double bond and a HFC-base refrigerant are being proposed.

A hermetic type refrigerant compressor that stores inside a hermetic container, a compressor for compressing hydrocarbon compound refrigerants not including chlorine and fluorine, an electric motor for driving this compressor, and a refrigerating machine oil having miscibility with the hydrocarbon compound refrigerants, which comprises at least one of an insulation member and a sliding portion selected from at least one type of linear chain type of PPS resin, resol type phenolic resin, fluoride resin (PTFE, ETFE, FEP, PFA), PA resin, PI resin, PBT resin, and PET resin. The insulation member and the sliding portion are produced by applying a lubricant to their molded shapes formed by inj ection molding or extrusion molding. The insulation member and the sliding portion contain an inner lubricant within 5 weight %. The hermetic type electric compressor is proposed, which comprises more than one type of the hydrocarbon compound refrigerants selected from R170 (ethane), R290 (propane), R600 (n-butane), R600a (I-butane), R1150 (ethylene), and R1270 (propylene) (for example, refer to patent document 1).

The compressor for the low GWP refrigerant is provided by adopting a lowGWP refrigerant of less than 150 to the compressor. The sliding portion is constructed of a material having dispersed the hard particles within a soft substrate for sufficiently controlling an influence of the global warming. At the same time, by installing an inclined layer to a surface layer of the sliding portion, the surface is enriched by the soft substrate, for increasing an ability to form an oil film, and for sufficiently controlling a friction of the sliding portion in a refrigerant environment having a higher polarity than the R134a and a GWP of less than 150. Moreover, the polarity of higher than the R134a and the GWP of less than 150 are ideal as the refrigerant. The ideal HFC-based non-combustible refrigerants are, for example, the combinations of compounds having a double bond, bromine, iodine, and oxygen. Moreover, a mixed refrigerant is proposed, in which at least one of the constituents included in the mixture has a higher polarity than that of the R134a (for example, refer to patent document 2).
[Patent Document **1]** Japanese Unexamined Patent Publication No. 2000-274360
[Patent Document **2]** Japanese Unexamined Patent Publication No. 2008-2368

A substance having carbon-carbon double bond has a problem in stability because the substance is likely to be decomposed and polymerized. In general, conditions of the polymerization include a high temperature, a high pressure, and a catalyst.

When the rotary compressor is used as the compressor, and if the substance having carbon-carbon double bond is being used as the refrigerant, there is a concern for decomposition and polymerization of the substance having the carbon-carbon double bond occurring at the sliding portion of the rotary compressor. Measures to control these are needed.

The patent documents 1 and 2 do not mention this point.

US 5 947 710 A discloses a rotary compressor for compressing HFC refrigerant which is lubricated by a synthetic lubricant. The rotary compressor comprises pump means including a piston rollably disposed within a bore of a cylinder and a vane having a tip coacting with said piston. The tip has a diamond-like-carbon coating thereon made up of a series of alternating hard and lubricious layers whereby the coefficient of friction between the tip and the piston is reduced.

JP 8177772 A shows a vane pump to be used as a compressor which is arranged by bringing a peripheral surface of a cylindrical rotor into contact with an inner peripheral surface of a cylinder of a housing. A vane is arranged by interposing an elastic material in a groove provided in the housing, and the tip of the vane is brought into pressure contact with the outer peripheral surface of the rotor. A coating film composed of a diamond film or an amorphous hard carbon film is provided on the outer peripheral surface of the rotor.

Further, US 5 951 273 A discloses a rotary compressor, wherein a tip of a vane slid with a rolling piston is mechanically finish-ground in the direction of the sliding movement between the vane and the rolling piston, and provided with a protective coating film being proof against abrasion which is composed of non-ferrous metal formed by physical vapour deposition method, or composed of a chromium nitride compound formed by an ion plating method. Hydrofluorocarbon is employed as a refrigerant, and ester oil being compatible with the refrigerant is used as a lubricating oil.

Finally, WO 2008/053951 A1 & EP 2 083 062 A1 describe a lubricating oil composition for a refrigerator which uses a base oil including as the main component at least one kind of oxygen-containing compounds selected from olyoxyalkylene glycols, polyvinyl ethers, copolymers of poly(oxy)alkylene glycols or monoethers thereof and plyvinyl ethers, polyol esters, and polycarbonates. The lubricating oil composition is used for a refrigerator that uses a refrigerant represented by the molecular formula CₚO_{q}FᵣRₛ, wherein R represents Cl, Br, I or H; p represents an integer of 1 to 6, q represents an integer of 0 to 2, r represents an integer of 1 to 14, and s represents an integer of 0 to 13.

The present invention which has attempted to solve the above mentioned point is directed to provide a rotary compressor that can control the occurrence of decomposition or polymerization at each sliding portion due to a chemical reaction of the refrigerant that includes a halogenated hydrocarbon having carbon-carbon double bond within its composition, a hydrocarbon having carbon-carbon double bond within its composition, and a mixture including at least one of the halogenated hydrocarbon having carbon-carbon double bond within its composition and the hydrocarbon having carbon-carbon double bond within its composition.

### SUMMARY OF THE INVENTION

According to the present invention, a method for compressing a refrigerant in a rotary compressor comprising the steps of: providing a rotary compressor including a compressing element for compressing a refrigerant, and providing components configuring sliding portions, which are provided to the compressing element, wherein at least either one of the components configuring each sliding portion, at least at its sliding surface, is constructed of a nonmetal, the method being characterized in that either one of a mixture of HFO-1234yf and R32, and a mixture of HFO-1234yf and R41 is used as the refrigerant.

According to a preferred embodiment of this method, PAG (poly-alkylene glycol) having an EO (ethylene oxide) percentage of 50% or less is used as refrigerating machine oil for lubricating the sliding portions.

According to the rotary compressor of the present invention, at least either one of the components configuring each sliding portion is constructed of a nonmetal at a surface of the sliding portion at least, so that an elevated temperature due to a direct contact of metal does not occur, and a metallic surface is not activated for the case of using any one of the refrigerant which includes a halogenated hydrocarbon having carbon-carbon double bond within its composition, a hydrocarbon having carbon-carbon double bond within its composition, and a mixture including at least one of the halogenated hydrocarbon having carbon-carbon double bond within its composition and the hydrocarbon having carbon-carbon double bond within its composition. Therefore, the occurrence of decomposition and polymerization due to the chemical reaction at the sliding portion is controlled. According to the rotary compressor of the present invention, a sludge generation, a failure of the compressor, and a clogging of the refrigerant path are controlled, making it capable of achieving a long-term reliability.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.
Fig. 1 is a longitudinal sectionof the rotary compressor 200, in accordance with the first embodiment.
Fig. 2 is a cross section A-A of Fig. 1, in accordance with the first embodiment.
Fig. 3 is a perspective view of the rolling piston 2, in accordance with the fourth embodiment.
Fig. 4 illustrates aperspective viewof the main bearing 4, in accordance with the fifth embodiment (a portion of the main bearing 4 is omitted).

### DETAILED DESCRIPTION OF THE EMBODIMENTS

### First Embodiment

At first, the refrigerant in subject of the present embodiment will be described. The refrigerant in subject of the present embodiment is shown below.
(1) Halogenated hydrocarbon having carbon-carbon double bond within its composition: for example, HFO-1234yf (CF₃CF=CH₂) is the most likely refrigerant as a low GWP (global warming potential) refrigerant in the field of automobile air conditioning. HFO is an abbreviation for hydro-fluoro-olefin. Olefin is an unsaturated hydrocarbon having a single double bond. Moreover, the HFO-1234yf has a GWP of 4.
(2) Hydrocarbon having carbon-carbon double bond within its composition: for example, R1270 (propylene). The R1270 has a GWP of 3, which is less than that of the HFO-1234yf, however, an inflammable property of the R1270 is greater than that of the HFO-1234yf.
(3) Mixture including at least one of the halogenated hydrocarbon having carbon-carbon double bond within its composition and the hydrocarbon having carbon-carbon double bond within its composition: for example, a mixture of the HFO-1234yf and R32. The HFO-1234yf, being a low-pressure refrigerant, a pressure loss gets large, and a performance of the refrigerating cycle (especially in the evaporator) is likely to decline. For this reason, mixtures including the R32, R41, and the like, being a high-pressure refrigerant than the HFO-1234yf , is practically competent.

A substance having carbon-carbon double bond within its composition has been already described as having a problem in terms of stability, that is, it has tendencies to decompose and polymerize. Taking the HFO-1234yf as an example, this is described in a little more detail.

The substance having double bond has the tendencies to decompose and polymerize. In general, the conditions of polymerization include the high temperature, the high pressure, and the catalyst. Those substances having a large proportion of number of fluorine atoms replacing with hydrogen atoms tend to polymerize readily, compared with the hydrocarbon. For example, Roy J. Plunkett, the American Chemist (born on June 26, 1910 and died on May 12, 1994) has discovered in 1938 that tetrafluoroethylene (all of the four hydrogen atoms in ethylene have been replaced with fluorine atoms) undergoes a natural polymerization reaction inside a cylinder, and accidentally discovered that the fluoride resin is being synthesized.

As for the HFO-1234yf, among 6 hydrogen atoms of propylene, 4 hydrogen atoms are replaced with fluorine atoms, which is considered to have a high potential for polymerization, by a mechanochemichal reaction and the like. The mechanochemichal reaction is a chemical reaction occurring as a result of giving a mechanical energy such as shock or friction to the substance in subject by activation (the mechanochemical activation).

Hereinbelow, the rotary compressor that can control the occurrence of decomposition and polymerization due to the chemical reaction of the refrigerant at each sliding portion will be described in detail. The refrigerant includes at least one of the halogenated hydrocarbon having carbon-carbon double bond within its composition, the hydrocarbon having carbon-carbon double bond within its composition, and the mixture including at least one of the halogenated hydrocarbon having carbon-carbon double bond within its composition and the hydrocarbon having carbon-carbon double bond within its composition.

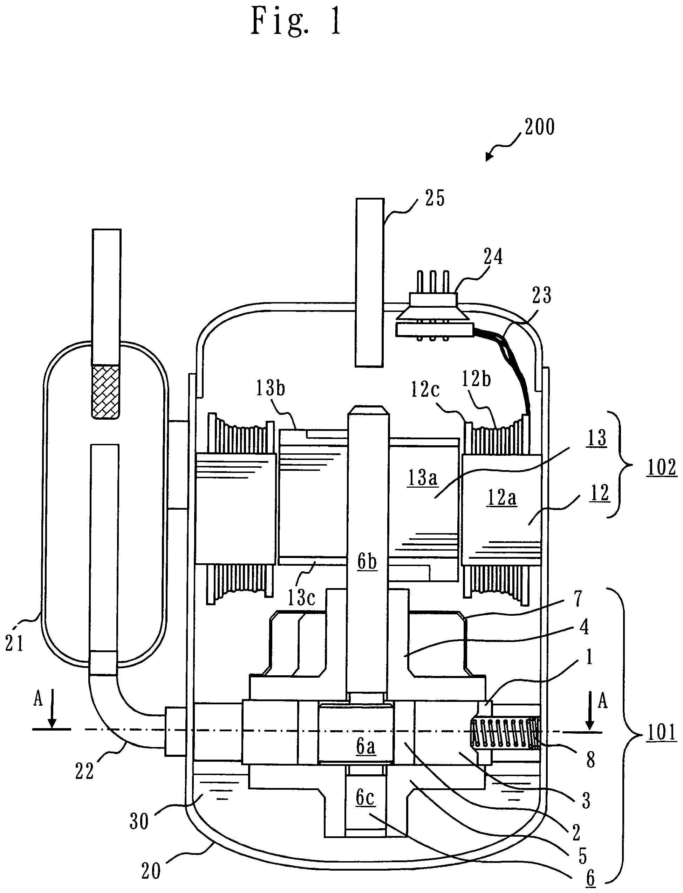

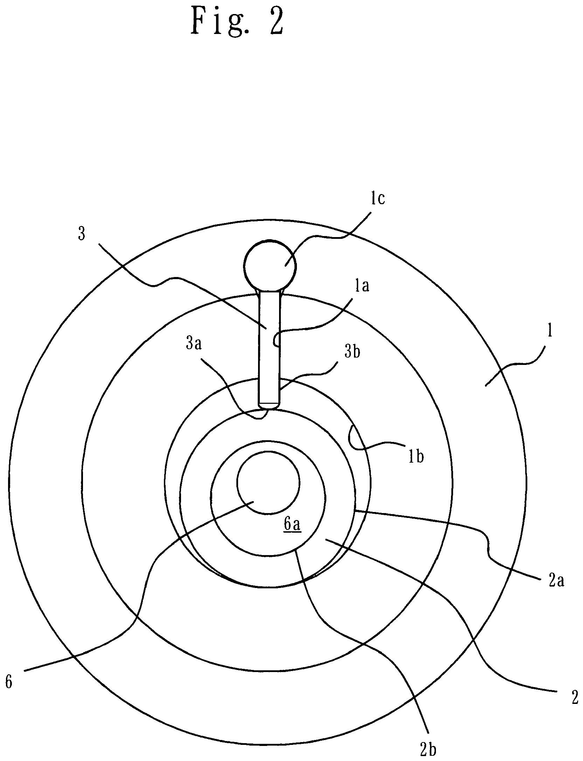

Figs. 1 and 2 illustrate the first embodiment. Fig. 1 is a longitudinal section of the rotary compressor 200. Fig. 2 is a cross section through A-A of Fig. 1.

The characteristic of the present embodiment is in a configuration of each sliding portion of the rotary compressor 200. The explanation of the rotary compressor 200 is simplified since its overall configuration is well known.

As one example of the rotary compressor 200 shown in Fig. 1, there is a vertical type of the rotary compressor 200 having a hermetic container 20 that is highly pressurized inside. A compressing element 101 is stored at a lower part inside the hermetic container 20. An electric motor element 102 for driving the compressing element 101 is stored at an upper part inside the hermetic container 20, which is also an upper part of the compressing element 101.

A refrigerating machine oil 30 for lubricating each sliding portion of the compressing element 101 is stored at a bottom part inside the hermetic container 20.

At first, a configuration of the compressing element 101 is described. A cylinder 1 having a compression room formed therein has a generally circular outer periphery when viewed from the above, and provides a cylinder room 1b which serves as a space having a generally circular space when viewed from the above. Both ends of the cylinder room 1b in the axial direction are open. When viewed from the side, the cylinder 1 has a prescribed height in the axial direction.

A parallel vane groove 1a is installed, which extends in a radial direction, and which is connected to the cylinder room 1b serving as an approximately circular space of the cylinder 1.

Moreover, at a rear face (the outer side) of the vane groove 1a, a back pressure room 1c serving as a generally circular space when viewed from the above connected to the vane groove 1a is provided.

At the cylinder 1, a suction port (not illustrated) communicates from an outer periphery plane of the cylinder 1 to the cylinder room 1b, where an suction gas from the refrigerating cycle passes through.

At the cylinder 1, a discharge port (not illustrated) is installed by notching an edge area of the circle forming the cylinder room 1b serving as the generally circular space (an edge face of the electric motor element 102 side).

Material constituting the cylinder 1 is a gray cast iron, sintering, and carbon steel, and the like.

A rolling piston 2 rotates eccentrically inside the cylinder room 1b. The rolling piston 2 has a ring shape. An inner periphery of the rolling piston 2 is slidably fitted to an eccentric axis portion 6a of the crankshaft 6.

An outer periphery of the rolling piston 2 and an inner wall of the cylinder room 1b of the cylinder 1 are always assembled to have a fixed gap therebetween.

Material constituting the rolling piston 2 is a steel alloy containing chromium and so forth.

A vane 3 is stored inside the vane groove 1a of the cylinder 1. The vane 3 is always pressed against the rolling piston 2 with a vane spring 8 installed to a rear pressure room 1c. Since the hermetic container 20 inside the rotary compressor 200 is high in pressure, a force due to a pressure difference between the high pressure inside the hermetic container 20 and a pressure of the cylinder room 1b is effecting on a rear face of the vane 3 (the rear pressure room 1c side) when the operation starts, therefore, the vane spring 8 is mainly used for a purpose of pressing the vane 3 against the rollingpiston 2 at an initiation time of the rotary compressor 200 (which is a state of no pressure difference between the pressure inside the hermetic container 20 and the pressure of the cylinder room 1b).

A shape of the vane 3 is planer and generally rectangular in shape (a thickness of the peripheral direction is less than a length in the radial and axial directions).

As a material constituting the vane 3, a high-speed tool steel is mainly used.

The main bearing 4 blocks one end face (the electric motor element 102 side) of the cylinder room 1b of the cylinder 1 (includes the vane groove 1a), and slidably fitted to the main axis part 6b of the crankshaft 6 (a part above the eccentric axis portion 6a).

The main bearing 4 provides a discharge valve (not illustrated). However, the discharge valve may be attached to either one of the main bearing 4 and the sub bearing 5, or both.

The main bearing 4 has approximately a reverse T-shaped when viewed from the side.

A sub bearing 5 blocks an another end face (the refrigerating machine oil 30 side) of the cylinder room 1b of the cylinder 1 (includes the vane groove 1a), and slidably fits to a sub shaft portion 6c (a part below the eccentric axis portion 6a) of the crankshaft 6.

The sub bearing 5 is approximately T-shaped when viewed from the side.

Material constituting the main bearing 4 and the sub bearing 5 is a gray cast iron, sintering, and carbon steel, and the like, which is the same as the material constituting the cylinder 1.

A discharge muffler 7 is attached to an outer side of the main bearing 4 (the electric motor element 102 side). A high-temperature and high-pressure discharge gas discharged from the discharge valve of the main bearing 4 temporarily enters the discharge muffler 7, and then the discharge gas is released from the discharge muffler 7 into the hermetic container 20. However, the discharge muffler 7 maybe attached to the sub bearing 5 side in some cases.

A suction muffler 21 is provided on a side of the hermetic container 20 for absorbing a low-pressure refrigerant gas from the refrigerating cycle and for controlling a direct suction of a liquid refrigerant into the cylinder room of the cylinder 1 when the liquid refrigerant is returning. The suction muffler 21 is connected to the suction port of the cylinder 1 via a suction pipe 22. A main body of the suction muffler 21 is fixed to a side face of the hermetic container 20 by welding.

Next, a configuration of the electric motor element 102 will be described. As the electric motor element 102, a brushless DC motor is adopted, however, an induction motor may be used in some cases.

The electric motor element 102 provides a stator 12 and a rotor 13. The stator 12 is fitted and fixed to an inner peripheral face of the hermetic container 20. The rotor 13 is disposed at an inner side of the stator 12 via a gap.

The stator 12 includes a stator core 12a produced by punching an electromagnetic steel plate of 0.1 to 1. 5 mm thickness, laminating a prescribed number in the axial direction, and fixing by stalking and welding, and a three-phase winding 12b wound by a concentrated winding method at a plurality of teeth portions (not illustrated) of the stator core 12a. The winding 12b are wound to the teeth port ions via insulating members 12c. Material constituting the winding 12b is AI (amideimide)/EI (etherimide) coated copper wire. Material constituting the insulating members 12c mainly being used includes: PET (polyethylene terephthalate), PBT (polybutylene terephthalate), FEP (tetraflouro ethylene hexaflouro propylene copolymer), PFA (tetrafluoro ethylene perfluoro vinyl ether copolymer), PTFE (polytetrafluoroethylene), LCP (liquid crystal polymer), PPS (polyphenylene sulfide), phenol resins, and so forth on.

Portions of the wiring 12b are protruded from both ends of the stator core 12a in the axial direction (the lower and upper ends in the axial direction in Fig. 1) . Such protruded portions are called coil ends. Lead wires 23 are connected to terminals (not illustrated) attached to the insulating members 12c.

At an outer periphery of the stator core 12a, notches (not illustrated) are formed at a generally equal interval in a plurality of positions. These notches serve as paths for the discharge gas released from the discharge muffler 7 into the hermetic container 20. Also, these notches serve as paths for the refrigerating machine oil 30 from the electric motor element 102 returning to the bottom part of the hermetic container 20.

The rotor 13 positioned at the inner side of the stator 12 via the gap (normally about 0.3 to 1 mm), similar to the stator core 12a, includes a rotor core 13a produced by punching electromagnetic steel plates of 0.1 to 1.5 mm thickness, laminating a prescribed number in the axial direction, and fixing by stalking and welding, and permanent magnets inserted to permanent magnet insertion holes (not illustrated) formed on the rotor core 13a. Ferrite magnet and rare earth magnet are used as the permanent magnets.

End plates are formed at both ends of the rotor 13 in the axial direction (the upper and lower end of the axial direction in Fig. 1) so that the permanent magnets inserted to the permanent magnet insertion holes do not come off in the axial direction. An upper end plate 13b is formed in the upper end of the rotor 13 in the axial direction, and a bottom end plate 13c is formed in the lower end of the rotor 13 in the axial direction.

The upper end plates 13b and the lower end plates 13c also have balancing and rotating roles. The upper end plates 13b and the lower endplates 13c are fixed into one body by staking with fixing rivets (not illustrated).

Through holes that penetrate in a generally axial direction, serving as a gas passageway of the discharge gas, are formed on the rotor core 13a.

A terminal 24 (called the glass terminal) connected to a power source serving as the electricity supply source is fixed to the hermetic container 20 by welding. In the example of Fig. 1, the terminal 24 is installed to an upper face of the hermetic container 20. The lead wires 23 from the electric motor element 102 are connected to the terminal 24.

A discharge pipe 25 having both ends opened is fit to the upper face of the hermetic container 20 by insertion. The discharge gas discharged from the compressing element 101 is discharged from inside the hermetic container 20 to the refrigerating cycle outside, through the discharge pipe 25.

In case of a configuration in which the electric motor element 102 is the induction motor, it includes the rotor core 13a produced by punching electromagnetic steel plates of 0.1 to 1. 5 mm thickness, laminating a prescribed number in the axial direction, and fixing by stalking and welding, and a squirrel cage winding that includes conductors made from aluminum or copper inserted to slots formed on the rotor core 13a and end rings by which the conductors are short circuited at both ends.

Examples of the refrigerating machine oil 30 stored at the bottom part inside the hermetic container 20, that are generally being used in the conventional rotary compressor 200, include: POE (polyortho esters), PVE (polyvinyl ester), PAG (poly-alkylene glycol), PAO (poly alpha olefin), HA (hard alkyl benzene), MO (mineral oil), and so forth on. As for PAG, an EO percentage of 50% and less is typical. Moreover, naphthenic oil and paraffin oil are used as MO. A viscosity of the oil is selected so that an efficiency of the rotary compressor 200 is not reduced, and to give a sufficient lubrication to the rotary compressor 200, taking into account an amount of the refrigerant dissolving into the oil. Generally, a kinematic viscosity of a basic oil (at 40°C) ranges from 5 to 300 cSt.

A typical operation of the rotary compressor 200 will be described. The rotor 13 rotate by supplying electricity to the stator 12 of the electric motor element 102 through the electrode 24 and the lead wires 23. Then, a crankshaft 6 fixed to the rotor 13 rotates, accompanied by the eccentric rotation of the rollingpiston 2 inside the cylinder room 1b of the cylinder 1. A space between the cylinder room 1b of the cylinder 1 and the rolling piston 2 is divided into two by the vane 3. Accompanied by the rotation of the crankshaft 6, volumes of these two spaces change, in which one side absorbs the refrigerant from the suction muffler 21 with a gradual expansion of the capacity, and the other side compresses the refrigerant gas inside with a gradual compression of the capacity. The compressed discharge gas is once discharged inside the hermetic container 20 from the discharge muffler 7, and is further discharged outside of the hermetic container 20 from the discharge pipe 25 at the upper face of the hermetic container 20 by passing through the electric motor element 102.

The discharge gas passing through the electric motor element 102 passes thru the through holes of the rotor 12 of the electric motor 102, a gap including slot openings of the stator core 12a (not illustrated, also known as slot opening portions), and the notches formed at the outer periphery of the stator core 12a.

When the rotary compressor 200 performs the above operation, there are a plurality of sliding portions where the components slide with one another as shown below.
(1) First sliding portion: the outer periphery 2a of the rolling piston 2 and an end 3a of the vane 3 (inside);
(2) Second sliding portion: the vane groove 1a of the cylinder 1 and a side portion 3b of the vane 3 (both side faces);
(3) Third sliding portion: the inner periphery 2b of the rolling piston 2 and an eccentric axis portion 6a of the crankshaft 6;
(4) Fourth slidingportion: an inner periphery of the main bearing 4 and a main shaft portion 6b of the crankshaft 6; and
(5) Fifth sliding portion: an inner periphery of the sub bearing 5 and a sub shaft portion 6c of the crankshaft 6.

Components configuring the sliding portions installed to the compressing element 101 are summarized.
(1) cylinder 1;
(2) rolling piston 2;
(3) vane 3;
(4) main bearing 4;
(5) sub bearing 5;
(6) crankshaft 6.

Moreover, although not illustrated in the drawings, when a drive shaft is driven, a support body rotates at the same time as a protruded end of the vane 3 which is installed to the rollingpiston 2 as one body entering and exiting along a receiving groove of the support body. That is, the vane 3 swings in reciprocating motion in the radial direction according to the rotation of the rolling piston 2. This is a swinging type rotary compressor that always divides inside the cylinder room 1b into a compression room and a suction room.

In the swinging type rotary compressor, the protruded end of the vane 3 and the receiving groove of the support body serve as one sliding portion.

Moreover, a cylindrical-shaped tubular hole is formed at an intermediate portion of the suction port and the discharge port of the cylinder 1. A rotable support body comprising two semi-tubular components having a semi-circular shape in cross section is fitted to the tubular hole. Therefore, an outer peripheral face of the support body and the tubular hole of the cylinder serve as the other sliding portion.

In the present embodiment, since the refrigerant having the carbon-carbon double bond within its composition is used, the chemical reaction of the refrigerant is likely to occur, compared with the conventional refrigerant. In order to prevent this fromhappening, each sliding portion described above employs a configuration that avoids a direct contact between the metals touching one another which is liable to generate the high-temperature condition and the catalytic reaction.

At first, the outer periphery of the rolling piston 2 and the end 3a of the vane 3, both serving as the first sliding portion, has a configuration which is coated (one example of nonmetal) by DLC-Si (diamond like carbon with silicon) at a surface of the vane 3. As for sliding in between the outer periphery of the rolling piston 2 and the end 3a of the vane 3, since the direct contact between the metals touching one another can be avoided, and that the high-temperature condition is not attained, and the metallic surfaces are not easily activated, therefore, the decomposition and polymerization of the refrigerant can be controlled.

The DLC-Si coating is an amorphous carbon containing silicon, and a surface layer hardness is 2000 to 2500 Hmv, and a film thickness is about 3µm.

As for the vane groove 1a of the cylinder 1 and the side portion 3b of the vane 3, both serving as the second sliding portion, by applying the DLC-Si coating to the surface of the vane 3, the direct contact between the metals can be avoided, so that the high-temperature condition is not attained, and the metallic surface is not easily activated, therefore, the decomposition and polymerization of the refrigerant can be controlled.

As for the inner periphery 2b of the rolling piston 2 and the eccentric axis portion 6a of the crankshaft 6, both serving as the third sliding portion, by forming a manganese phosphate film (one example of nonmetal) on a surface of the crankshaft 6, the direct contact between the metals can be avoided, so that the high-temperature condition is not attained, and the metallic surface is not easily activated, therefore, the decomposition and polymerization of the refrigerant can be controlled. Moreover, the manganese phosphate film may also be formed at the inner periphery 2b of the rolling piston 2.

As for the inner periphery of the main bearing 4 and the main shaft portion 6b of the crankshaft 6, both serving as the fourth sliding portion, and the inner periphery of the sub bearing 5 and the sub shaft portion 6c of the crankshaft 6, both serving as the fifth sliding portion, by forming the manganese phosphate filmona surface of the crankshaft 6 , the direct contact between the metals can be avoided, so that the high-temperature condition is not attained, and the metallic surface is not easily activated, therefore, the decomposition and polymerization of the refrigerant can be controlled. Moreover, the manganese phosphate film may also be formed at the inner peripheries of the main bearing 4 and the sub bearing 5.

In all sliding portions inside the rotary compressor 200 configured accordingly, the direct contact between the metals is avoided, and an iron material used as the components of the compressing element 101 is prevented from acting as the catalyst of the decomposition and polymerization of the refrigerant having the carbon-carbon double bond within its composition. A sludge generation, a failure of the compressor, and a clogging of the refrigerant path are controlled, making it capable of achieving a long-term reliability.

### Second Embodiment

In the first embodiment, a method for avoiding the metallic contacts for the five sliding portions, and for controlling a catalytic effect of the iron material against the decomposition and the polymerization of the refrigerant having the carbon-carbon double bond within its composition is described as one example. There are still other methods available for obtaining the similar effects besides that described in the first embodiment. Another example of the outer periphery 2a of the rolling piston 2 and the end 3a of the vane 3, both serving as the first sliding portion, is illustrated in the second embodiment.

In the first embodiment, the method of applying the DLC-Si coating to the vane 3 is shown, however, other coatings such as DLC (diamond like carbon), CrN (chromium nitride), TiN (titanium nitride), TiCN (titanium carbonitride), TiAlN (titanium aluminum nitride), WC/C (tungsten carbide/carbon), VC (vanadium carbide) and the like may be implemented to the vane 3. Since the metal is not exposed at a sliding face of the vane, these coatings exhibit the similar effects as the coating of the first embodiment.

Moreover, in the vane 3 , other than the method of coating the metallic surface with the non-metallic coating, there is a method in which the vane 3 itself is made with a ceramic material. Such materials include SiC (silicon carbide), ZrO₂ (zirconium oxide), Al₂O₃ (aluminium oxide), Si₃N₄ (silicon nitride), and the like. By using these materials, since the metal is not exposed to the sliding face of the vane 3, the similar effects as the first embodiment can be achieved.

The method of not exposing the metallic surface at the surface of the vane 3 is shown in the first embodiment, however, the similar method may be implemented to the outer periphery 2a of the rolling piston 2. By coating a surface including the outer periphery 2a of the rolling piston 2 with DLC-Si, DLC, CrN, TiN, TiCN, TiAlN, WC/C, VC, and the like, the metal is not exposed to the sliding face of the outer periphery 2a of the rolling piston 2 is not exposed to the sliding face, therefore, the similar effects as the first embodiment can be achieved.

Moreover, in the rolling piston 2, there is not only the method of non-metallic coating of the metallic surface, but there is also the method of making the material of the rolling piston 2 with the ceramic material. As applicable materials, there are SiC, ZrO₂, Al₂O₃, Si₃N₄, and the like. Since the metal is not exposed to the sliding face of the outer periphery 2a of the rolling piston 2, therefore, the similar effects as the first embodiment can be achieved.

### Third Embodiment

Another example of the vane groove 1a of the cylinder 1 and the side portion 3a of the vane 3, both serving as the second sliding portion, is illustrated in the third embodiment. By implementing coatings such as DLC, CrN, TiN, TiCN, TiAlN, WC/C, VC, and the like to the vane 3 described above, the second sliding portion also is prevented from the metals being exposed to the sliding face of the vane 3, therefore, the similar effects as the first embodiment is obtained. Moreover, the materials of the vane 3 can be made from ceramics such as SiC, ZrO₂, Al₂O₃, Si₃N₄, and the like, so that the second sliding portion also is prevented from the metals being exposed to the sliding face of the vane 3, therefore, the similar effect as the first embodiment is obtained.

### Fourth Embodiment

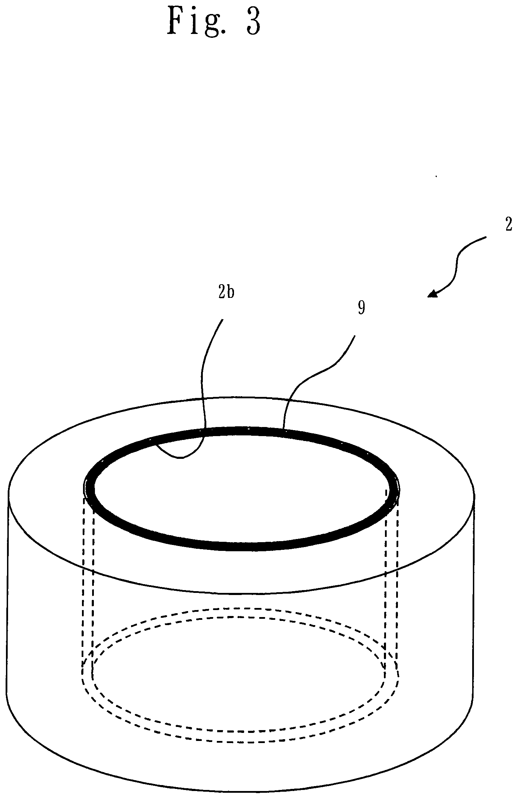

Fig. 3 is a perspective view of the rolling piston 2, in accordance with the fourth embodiment.

Another example for the inner periphery 2b of the rolling piston 2 and the eccentric axis portion 6a of the crankshaft 6, both serving as the third sliding portion, is illustrated in the fourth embodiment.

In the first embodiment, the method of forming the manganese phosphate film to the surface of the crankshaft 6 is described. This may also be implemented to the rolling piston 2 side, for example, as shown in Fig. 3, there is a method of using an axis receiving material 9 at an inner radius portion of the rolling piston 2.

Two types of the axis receiving material 9 include the metallic type and the resinous type (the non-metallic type). The resinous type of the axis receiving material 9 (one example of the nonmetal) is suitable for the purpose of the present embodiment.

As main components of the resinous type of the axis receiving material 9, specifically, PTFE (poly tetra fluoro ethylene) and POM (poly acetal) are ideally used. In this way, since the metal is not exposed to the sliding portion of the inner radius side of the rolling piston, therefore, the similar effects as the first embodiment can be obtained.

Moreover, the axis receiving material 9 (one example of the nonmetal) may be used for the eccentric axis portion 6a of the crankshaft 6.

### Fifth Embodiment

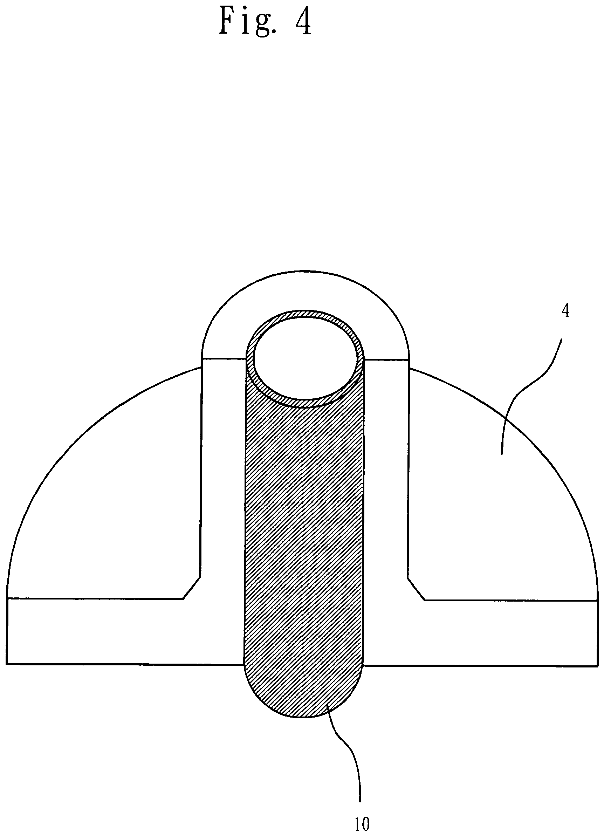

Fig. 4 is a perspective view of the main bearing 4 (a portion of the main bearing 4 is omitted) in accordance with the fifth embodiment.

Another examples for the inner periphery of the main bearing 4 and the main shaft portion 6b of the crankshaft 6, both serving as the fourth sliding portion, and the inner periphery of the sub bearing 5 and the sub shaft portion 6c of the crankshaft 6, both serving as the fifth sliding portion, are illustrated in the fifth embodiment.

A method of forming the manganese phosphate film to the surface of the crankshaft 6 is shown in the first embodiment, however, the same may be applied to the main bearing 4 and the sub bearing 5, for example, as shown in Fig. 4, there is a method of using an axis receiving material 10 (one example of the nonmetal) at an inner radius portion of the main bearing 4.

Two types of the axis receiving material 10 include the metallic type and the resinous type (the non-metallic type) . The resinous type of the axis receiving material 10 (one example of the nonmetal) is suitable for the purpose of the present embodiment.

As main components of the resinous type of the axis receiving material 10, specifically, PTFE (poly tetra fluoro ethylene) and POM (poly acetal) are ideally used. In this way, since the metal is not exposed to the sliding portion of the inner radius side of the main bearing 4, therefore, the similar effects as the first embodiment can be obtained.

Moreover, the axis receiving material 10 may be used for the main shaft portion 6b and the sub shaft portion 6c of the crankshaft 6.

As described above, one of the components configuring the sliding portion at least is constructed of a nonmetal at its surface, however, both components configuring the sliding portion may be constructed of a nonmetal at least at its surface.

As described above, an example of the rotary compressor 200 having one cylinder is described, however, the present embodiment is applicable to a multi-cylinder type of the rotary compressor.

While the present invention has been described with reference to exemplary embodiments, it is to be understood that the invention is not limited to the disclosed exemplary embodiments. The scope of the following claims is to be accorded the broadest interpretation so as to encompass all modifications , equivalent structures, and functions.

## Claims

1. A method for compressing a refrigerant in a rotary compressor (200) comprising the steps of:
providing a rotary compressor (200) including a compressing element (101) for compressing a refrigerant, and providing components configuring sliding portions, which are provided to the compressing element (101), wherein at least either one of the components configuring each sliding portion, at least at its sliding surface, is constructed of a non-metal,
the method being **characterized in that** either one of a mixture of HFO-1234yf and R32, and a mixture of HFO-1234yf and R41 is used as the refrigerant.

2. The method according to claim 1, wherein PAG (poly-alkylene glycol) having an EO (ethylene oxide) percentage of 50% or less is used as refrigerating machine oil for lubricating the sliding portions.

3. The method according to claim 1 or 2, wherein the nonmetal is formed by implementing a coating process to the surface of the components configuring the sliding portion, at least at its sliding surface.

4. The method according to claim 3, wherein the coating process is any one of DLC-Si (diamond like carbon with silicon), CrN (chromium nitride), TiN (titanium nitride), TiCN (titanium carbonitride), TiAlN (titanium aluminum nitride), WC/C (tungsten carbide/carbon), and VC (vanadium carbide).

5. The method according to claim 1 or 2, wherein the nonmetal configuring a non-metallic type bearing member is used.

6. The method according to claim 5, wherein the non-metallic type bearing member including PTFE (polytetrafluoroethylene) and POM (poly acetal) as main components is used.

7. The according to claim 1 or 2, wherein at least one of the components configuring the sliding portion being constituted with a ceramic material is used.

8. The method according to claim 7, wherein a ceramic material being any one of SiC (silicon carbide), ZrO₂ (zirconium oxide), Al₂O₃ (aluminium oxide), and Si₃N₄ (silicon nitride) is used.

9. The according to claim 1 or 2, wherein a nonmetal being constructed by a manganese phosphate film is used.

10. The method according to any one of the claims 1, 2, 3, 4, 7 or 8
wherein a compressing element (101) including
a ring-shaped rolling piston (2) for rotating eccentrically inside a cylinder room (1b) of a cylinder (1), and a vane (3) which is provided inside a vane groove (1a) of the cylinder (1), for sliding inside the vane groove (1a) by pressing against the rolling piston (2), wherein the sliding portion is an end of the vane (3) and an outer periphery of the rolling piston (2), is used.

11. The method according to any one of the claims 1, 2, 3,4, 7 or 8,
wherein a compressing element (101) is used, which includes a cylinder (1) having a vane groove (1a) and a vane (3) provided inside the vane groove (1a) of the cylinder (1), for sliding inside the vane groove (1a), wherein the sliding portion is the vane groove (1a) and the vane (3).

12. The method according to any one of the claims 1, 2, 5, 6 or 9,
wherein a compressing element (101) is used, which includes a ring-shaped rolling piston (2) that rotates eccentrically inside a cylinder room (1b) of a cylinder (1), and a crankshaft (6) having an eccentric axis portion (6a) which is eccentric from the main shaft, wherein the sliding portion is an inner periphery of the rolling piston (2) and the eccentric axis portion (6a) of the crankshaft (6).

13. The method according to any one of the claims 1, 2, 5, 6 or 9 wherein a compressing element (101) is used, which includes a crankshaft (6) having a main bearing (4) and a sub bearing (5), the main bearing (4) slidably fitted to the main shaft of the crankshaft (6), and the sub bearing (5) slidably fitted to the sub shaft of the crankshaft (6), wherein the sliding portion is the main bearing (4), the sub bearing (5), and the crankshaft (6).

## Patentansprüche

1. Verfahren zum Verdichten eines Kältemittels in einem Drehschieberkompressor (200), welches die Schritte aufweist:
Bereitstellen eines Drehschieberkompressors (200) enthaltend ein Verdichtungselement (101) zum Verdichten eines Kältemittels, und Bereitstellen von Komponenten, die Gleitbereiche konfigurieren, die für das Verdichtungselement (101) vorgesehen sind, wobei zumindest eine der Komponenten, die jeden Gleitbereich konfigurieren, zumindest auf ihrer Gleitfläche aus einem Nichtmetall gebildet ist,
welches Verfahren **dadurch gekennzeichnet, ist, dass** eine von einer Mischung aus HFO-1234yf und R32 und einer Mischung aus HFO-1234yf und R41 als das Kältemittel verwendet wird.

2. Verfahren nach Anspruch 1, bei dem PAG (Polyalkenglykol) mit einem EO (Ethylenoxid)-Prozentsatz von 50% oder weniger als Kältemaschinenöl zum Schmieren der Gleitbereiche verwendet wird.

3. Verfahren nach Anspruch 1 oder 2, bei dem das Nichtmetall durch Implementieren eines Prozesses der Beschichtung der Oberfläche der den Gleitbereich konfigurierenden Komponenten zumindest bei ihren Gleitflächen gebildet wird.

4. Verfahren nach Anspruch 3, bei dem der Prozess des Beschichtens irgendeiner von DLC-Si (diamantartiger Kohlenstoff mit Silizium), CrN (Chromnitrid), TiN (Titannitrid), TiCN (Titankarbonitrid), TiAlN (Titanaluminiumnitrid), WC/C (Wolframkarbid/Kohlenstoff) und VC (Vanadiumkarbid) ist.

5. Verfahren nach Anspruch 1 oder 2, bei dem das Nichtmetall, das ein Lagerteil vom nichtmetallischen Typ konfiguriert, verwendet wird.

6. Verfahren nach Anspruch 5, bei dem das Lagerteil vom nichtmetallischen Typ, das PTFE (Polytetrafluorethylen) und POM (Polyacetal) als Hauptkomponenten enthält, verwendet wird.

7. Verfahren nach Anspruch 1 oder 2, bei dem zumindest eine der Komponenten, die den Gleitbereich konfigurieren, der mit einem keramischen Material gebildet ist, verwendet wird.

8. Verfahren nach Anspruch 7, bei dem ein keramisches Material, das irgendeines von SiC (Siliziumkarbid), ZrO₂ (Zirkonoxid), Al₂O₃ (Aluminiumoxid) und Si₃N₄ (Siliziumnitrid) ist, verwendet wird.

9. Verfahren nach Anspruch 1 oder 2, bei dem ein Nichtmetall, das durch einen Manganphosphatfilm gebildet ist, verwendet wird.

10. Verfahren nach irgendeinem der Ansprüche 1, 2, 3, 4, 7 oder 8, bei dem ein Verdichtungselement (101) enthaltend einen ringförmigen Rollkolben (2) zum exzentrischen Drehen innerhalb eines Zylinderraums (1b) eines Zylinders (1) und einen Schieber (3), der innerhalb einer Schiebernut (1a) des Zylinders (1) angeordnet ist, um innerhalb der Schiebernut (1a) durch Drücken gegen den Rollkolben (2) zu gleiten, wobei der Gleitbereich ein Ende des Schiebers (3) und ein äußerer Umfang des Rollkolbens (2) ist, verwendet wird.

11. Verfahren nach einem der Ansprüche 1, 2, 3, 4, 7 oder 8, bei dem ein Verdichtungselement (101) verwendet wird, das einen Zylinder (1) mit einer Schiebernut (1a) und einen Schieber (3), der innerhalb der Schiebernut (1a) des Zylinders (1) angeordnet ist, zum Gleiten innerhalb der Schiebernut (1a) enthält, wobei der Gleitbereich die Schiebernut (1a) und der Schieber (3) ist.

12. Verfahren nach einem der Ansprüche 1, 2, 5, 6 oder 9, bei dem ein Verdichtungselement (101) verwendet wird, das einen ringförmigen Rollkolben (2), der sich exzentrisch innerhalb eines Zylinderraums (1b) eines Zylinders (1) dreht, und eine Kurbelwelle (6) mit einem exzentrischen Achsenbereich (6a), der in Bezug auf die Hauptwelle exzentrisch ist, enthält, wobei der Gleitbereich ein innerer Umfang des Rollkolbens (2) und der exzentrische Achsenbereich (6a) der Kurbelwelle (6) ist.

13. Verfahren nach einem der Ansprüche 1, 2, 5, 6 oder 9, bei dem ein Verdichtungselement (101) verwendet wird, das eine Kurbelwelle (6) mit einem Hauptlager (4) und einem Sublager (5) enthält, wobei das Hauptlager (4) gleitbar der Hauptwelle der Kurbelwelle (6) angepasst ist und das Sublager (5) gleitbar der Subwelle der Kurbelwelle (6) angepasst ist, wobei der Gleitbereich das Hauptlager (4), das Sublager (5) und die Kurbelwelle (6) ist.

## Revendications

1. Procédé de compression d'un produit réfrigérant dans un compresseur rotatif (200), comprenant les étapes suivantes :
disposition d'un compresseur rotatif (200) comprenant un élément de compression (101) pour comprimer un produit réfrigérant et disposition de composants configurant des portions coulissantes, qui sont prévus sur l'élément de compression (101), au moins un des composants configurant chaque portion coulissante étant constitué, au moins au niveau de sa surface de coulissement, d'un non-métal,
le procédé étant **caractérisé en ce qu'**un parmi un mélange de HFO-1234yf et R32 et un mélange de HFO-1234yf et R41 est utilisé en tant que produit réfrigérant.

2. Procédé selon la revendication 1, dans lequel du PEG (polyéthylène glycol) contenant un pourcentage de EO (oxyde d'éthylène) de 50 % ou moins est utilisé en tant qu'huile de machine de réfrigération pour lubrifier les portions coulissantes.

3. Procédé selon la revendication 1 ou 2, dans lequel le non-métal est formé en exécutant un processus de revêtement à la surface des composants configurant la portion coulissante, au niveau au niveau de sa portion coulissante.

4. Procédé selon la revendication 3, dans lequel le processus de revêtement est un parmi le DLC-Si (carbone de type diamant avec silicium), CrN (nitrure de chrome), TiN (nitrure de titane), TiAlN (nitrure d'aluminium et de titane), WC/C (carbure de tungstène/carbone) et VC (carbure de vanadium).

5. Procédé selon la revendication 1 ou 2, dans lequel le non-métal configurant un élément de palier de type non-métallique est utilisé.

6. Procédé selon la revendication 5, dans lequel l'élément de palier de type non-métallique contenant du PTFE (polytétrafluoréthylène) et du POM (polyacétal) en tant que composants principaux est utilisé.

7. Procédé selon la revendication 1 ou 2, dans lequel au moins un des composants configurant la portion coulissante étant constitué d'un matériau céramique est utilisé.

8. Procédé selon la revendication 7, dans lequel un matériau céramique, qui est sélectionné dans le groupe constitué de SiC (carbure de silicium), ZrO₂ (oxyde de zirconium), Al₂O₃ (oxyde d'aluminium) et Si₃N₄ (nitrure de silicium) est utilisé.

9. Procédé selon la revendication 1 ou 2, dans lequel un non-métal constitué d'un film de phosphate de manganèse est utilisé.

10. Procédé selon l'une des revendications 1, 2, 3, 4, 7 ou 8, dans lequel un élément de compression (101) comprenant un piston de roulement de forme annulaire (2) destiné à tourner de manière excentrique à l'intérieur d'un espace cylindrique (1b) d'un cylindre (1), et une pale (3) qui est disposée à l'intérieur d'une rainure de pale (1a) du cylindre (1), pour coulisser à l'intérieur de la rainure de pale (1a) en s'appuyant contre le piston de roulement (2), la portion coulissante étant une extrémité de la pale (3) et une périphérie extérieure du piston de roulement (2), est utilisé.

11. Procédé selon l'une des revendications 1, 2, 3, 4, 7 ou 8, dans lequel un élément de compression (101) est utilisé, qui comprend un cylindre (1) ayant une rainure de pale (1a) et une pale (3) disposée à l'intérieur de la rainure de pale (1a) du cylindre (1), pour coulisser à l'intérieur de la rainure de pale (1a), la portion coulissante étant la rainure de pale (1a) et la pale (3).

12. Procédé selon l'une des revendications 1, 2, 5, 6 ou 9, dans lequel un élément de compression (101) est utilisé, qui comprend un piston de roulement de forme annulaire (2) qui tourne de manière excentrique à l'intérieur d'un espace cylindrique (1b) d'un cylindre (1) et un vilebrequin (6) ayant une portion d'axe excentrique (6a) qui est excentrée par rapport à l'arbre principal, la portion coulissante étant une périphérie intérieure du piston de roulement (2) et la portion d'axe excentrique (6a) du vilebrequin (6).

13. Procédé selon l'une des revendications 1, 2, 5, 6 ou 9, dans lequel un élément de compression (101) est utilisé, qui comprend un vilebrequin (6) comprenant un palier principal (4) et un palier secondaire (5), le palier principal (4) étant ajusté de manière coulissante sur l'arbre principal du vilebrequin (6) et le palier secondaire (5) étant ajusté de manière coulissante sur l'arbre secondaire du vilebrequin (6), la portion coulissante étant le palier principal (4), le palier secondaire (5) et le vilebrequin (6).
